# EUROPEAN PATENT APPLICATION

(11) **EP 2 527 963 A1**
(43) Date of publication of application: **28.11.2012**
(21) Application number: 10842896.2
(22) Date of filing: 18.11.2010
(51) Int. Cl.: G06F 3/048

(54) **METHOD AND DEVICE FOR TOUCH CONTROL**

(30) Priority: 18.01.2010 CN 201010004045
(71) Applicant: Huawei Device Co., Ltd., Longgang District Shenzhen Guangdong 518129 (CN)
(72) Inventor: GENG, Liang, Shenzhen Guangdong 518129 (CN); LIU, Heng, Shenzhen Guangdong 518129 (CN); LI, Hui, Shenzhen Guangdong 518129 (CN); GUO, Lei, Shenzhen Guangdong 518129 (CN); HU, Wenbin, Shenzhen Guangdong 518129 (CN); ZHONG, Kang, Shenzhen Guangdong 518129 (CN); YU, Yao, Shenzhen Guangdong 518129 (CN)
(74) Representative: Epping - Hermann - Fischer
(86) International application number: PCT/CN2010/078859
(87) International publication number: WO 2011/085613

(57) **Abstract**

Embodiments of the present invention disclose a touch control method and apparatus. The method includes: entering, when it is detected that a user triggers a function control, a function state corresponding to the function control (11); detecting a touch control operation performed by the user on an operation object on a touch control panel (12); under the function state corresponding to the function control, performing corresponding processing on the operation object according to the touch control operation of the user (13). This solution is capable of implementing abundant touch control functions and is easy to implemented. Therefore, design complexity of a touch control apparatus is able to be reduced.

## Description

This application claims priority to Chinese Patent Application No. 201010004045.8, filed with the Chinese Patent Office on January 18, 2010, and entitled "TOUCH CONTROL METHOD AND APPARATUS", which is incorporated herein by reference in its entirety.

### FIELD OF THE INVENTION

The present invention relates to the field of touch control technologies, and in particular, to a touch control method and apparatus.

### BACKGROUND OF THE INVENTION

In man-machine interaction technologies, a touch control technology has a wide application, for example, an electric device such as a touch mobile phone and a touch computer. The man-machine interaction is able to be well implemented by using the touch control technology. The electric device using the touch control technology receives input information from a screen through a touch screen or a touch control panel, thereby providing a more visual and more convenient operation experience for a user.

The touch control technology in the prior art is mostly single-point touch control, that is, supporting the user to use a finger to perform a touch control operation, for example, clicking and dragging.

A multi-point touch control technology in the prior art allows the user to use multiple fingers to perform touch control, so as to implement a better touch control operation. For example, the user may use two fingers to slide on a touch panel to perform a zoom-in or zoom-out operation on a picture, and accurately locate the size of the zoomed-in picture or zoomed-out picture with two fingers.

In the prior art, a key technology of implementing multi-point touch control is a projected capacitive technology, and this technology includes a self capacitive type and a mutual capacitive type. The self capacitive type refers to that capacitance coupling is generated between a touch control object and an electrode, and a touch position is determined by measuring a change of the capacitance of the electrode. Main architecture of the mutual capacitive type is two conducting layers, when being touched, capacitance coupling is generated between two adjacent layers of electrodes, one layer of the two conducting layers is a drive line, the other layer is an induction line, and the two lines are perpendicular to each other. In running, one drive line is driven in turn, whether capacitance coupling occurs on an induction line interlaced with this drive line is measured, and an accurate touch position is obtained through one by one scanning. If an X*Y matrix is used, the number of times of detection is X*Y theoretically.

During the implementation of embodiments of the present invention, the inventor finds that the single-touch control technology in the prior art has many limitations, and many operations cannot be implemented through single-point touch control, for example, zooming in or zooming out a picture according to a size required by a user and rotating the picture, so that a purpose of the user is difficult to be achieved by using the single-point touch control. As for the multi-point touch control technology in the prior art, the workload is large, a more powerful processor needs to be used, power consumption is high, and meanwhile, design complexity such as the design complexity of cabling is high. Therefore, the costs are high.

### SUMMARY OF THE INVENTION

The present invention provides a touch control method and apparatus, so as to implement abundant touch control operations and reduce design complexity and costs.

An embodiment of the present invention provides a touch control method, including:
when it is detected that a user triggers a function control, entering a function state corresponding to the function control;
detecting a touch control operation performed by the user on an operation object on a touch control panel; and
under the function state corresponding to the function control, performing corresponding processing on the operation object according to the touch control operation of the user.

An embodiment of the present invention further provides a touch control apparatus, where the apparatus includes:
a first detection module, configured to, when it is detected that a user triggers a function control, enter a function state corresponding to the function control;
a second detection module, configured to, under the function state corresponding to the function control, detect a touch control operation performed by the user on an operation object on a touch control panel; and
a processing module, configured to, under the function state corresponding to the function control, perform corresponding processing on the operation object according to the touch control operation of the user.

In embodiments of the present invention, the function state corresponding to the function control is entered by triggering the function control, and the touch control operation of the user is further detected. Under this function state, the corresponding processing is performed on the operation object according to the touch control operation of the user. This solution is capable of implementing more abundant touch control functions than single-point touch control and is easy to implement. Therefore, the design complexity of the touch control apparatus is able to be reduced.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other accompanying drawings from these accompanying drawings without creative efforts.

FIG. 1 is a flow chart of a touch control method according to a first embodiment of the present invention;

FIG. 2a is a flow chart of a touch control method according to a second embodiment of the present invention;

FIG. 2b is a schematic diagram of a scenario of the touch control method according to the second embodiment of the present invention;

FIG. 3a is a flow chart of a touch control method according to a third embodiment of the present invention;

FIG. 3b is a schematic diagram of a scenario of the touch control method according to the third embodiment of the present invention;

FIG. 4a is a first schematic structural diagram of a touch control apparatus according to a fourth embodiment of the present invention;

FIG. 4b is a second schematic structural diagram of a touch control apparatus according to the fourth embodiment of the present invention; and

FIG. 4c is a third schematic structural diagram of a touch control apparatus according to the fourth embodiment of the present invention.

### DETAILED DESCRIPTION OF THE EMBODIMENTS

In order to make the objectives, technical solutions, and advantages of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

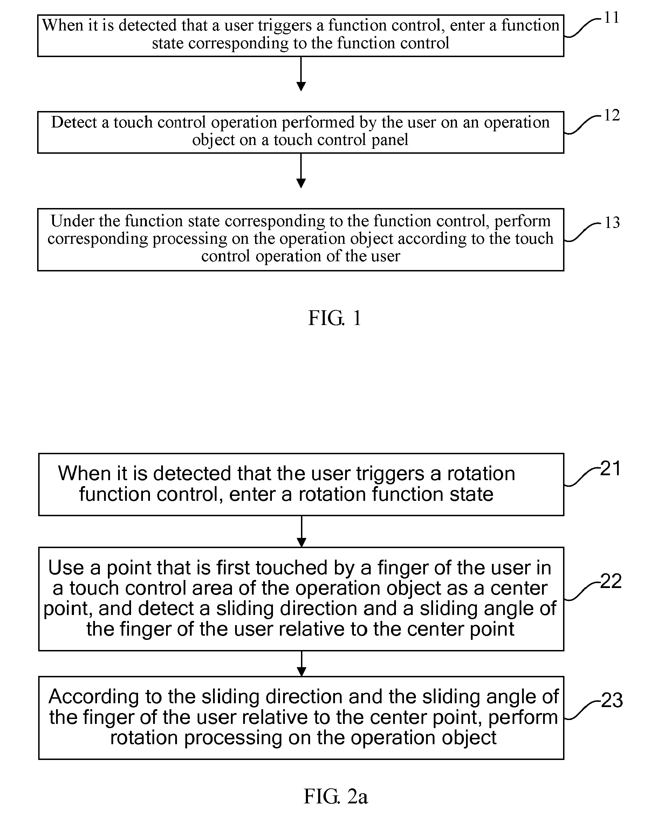

FIG. 1 is a flow chart of a touch control method according to a first embodiment of the present invention. The method includes the following steps:

Step 11: When it is detected that a user triggers a function control, enter a function state corresponding to the function control.

In this embodiment, various function controls are set on a touch control apparatus of the user, for example, a zoom function control and/or a rotation function control, and a function control may be a button on the touch control apparatus or a certain touch control area on a touch control panel. After the user clicks the button or touches an area of a function control on the touch control panel, a corresponding function state is entered. For example, if the user clicks a zoom button or touches an area of the zoom function control on the touch control panel, a zoom function state is entered, and it is determined that subsequent processing on an operation object (for example, a picture) is zoom processing; if the user clicks a rotation bottom or touches an area of the rotation function control on the touch control panel, a rotation function state is entered, and it is determined that the subsequent processing on the operation object is rotation processing.

Step 12: Detect a touch control operation performed by the user on the operation object on the touch control panel.

After the corresponding function state of the function control is entered, it is required to further detect a specific operation performed by the user on the operation object on the touch control panel. For example, under the rotation function state, it is required to further detect whether the user performs clockwise rotation or counterclockwise rotation on the touch control panel; under the zoom function state, it is required to further detect whether the user performs zoom-in processing or zoom out-processing on the operation object.

A method for detecting the touch control operation performed by the user on the touch control panel is illustrated in detail in the following embodiments with reference to specific application scenarios.

Step 13: Under the function state corresponding to the function control, perform corresponding processing on the operation object according to the touch control operation of the user.

After the corresponding function state of the function control is entered, and the touch control operation of the user is detected and determined, corresponding processing may be performed on the operation object. For example, under the rotation function state, if it is detected that the user performs a touch control operation of clockwise rotation, clockwise rotation is performed on the operation object.

In this embodiment, first, the function state corresponding to the function control is entered by triggering the function control, and then the touch control operation of the user is further detected. Under this function state, the corresponding processing is performed on the operation object according to the touch control operation of the user. This solution is capable of implementing more abundant touch control functions than single-point touch control and is easy to implement. Therefore, design complexity of the touch control apparatus is able to be reduced.

FIG. 2a is a flow chart of a touch control method according to a second embodiment of the present invention. In this embodiment, a user needs to perform a rotation operation on an operation object, for example, a certain picture, and the user may click a rotation function control to enter a rotation function state, so as to perform the rotation operation on the picture. The method includes the following steps:

Step 21: When it is detected that the user triggers the rotation function control, enter the rotation function state.

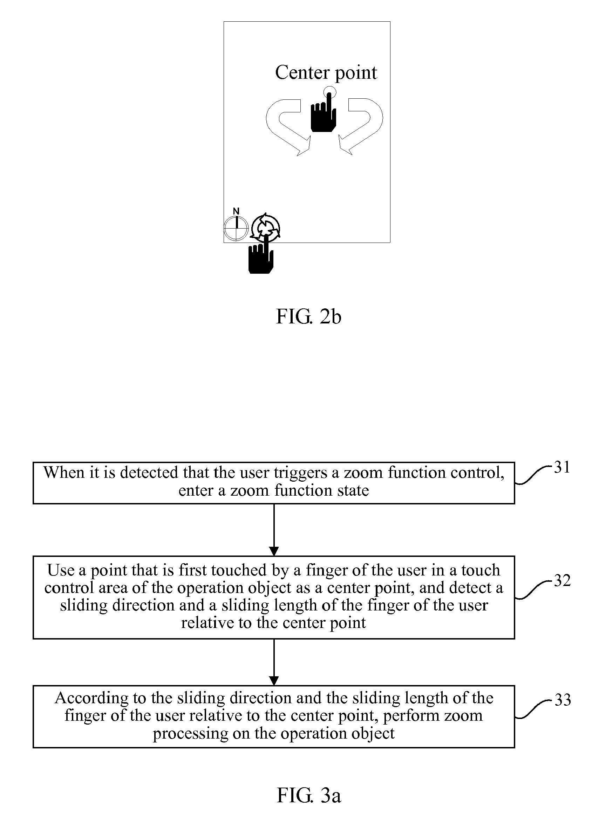

FIG. 2b is a schematic diagram of an application scenario of this embodiment. In FIG. 2b, the user first triggers the rotation function control, for example, clicks a rotation function button or touches a touch control area of the rotation function control. In this case, the rotation function state is entered. At this time, the user may use a finger to perform the rotation operation on the operation object on the touch control panel.

Step 22: Use a point that is first touched by the finger of the user in the touch control area of the operation object as a center point, and detect a sliding direction and a sliding angle of the finger of the user relative to the center point.

After the rotation function state is entered, it is required to further detect whether the finger of the user performs clockwise rotation or counterclockwise rotation, and an angle of the rotation. A detection method is as follows: using the point that is first touched by the finger of the user in the touch control area of the operation object as the center point, and detecting the sliding direction and the sliding angle of the finger of the user relative to the center point. If it is detected that the sliding direction of the finger of the user relative to the center point is a clockwise direction and the finger of the user slides 30 degrees clockwise, it is determined that the touch control operation of the user is rotating the operation object 30 degrees clockwise; if it is detected that the sliding direction of the finger of the user relative to the center point is a counterclockwise direction and the finger of the user slides 40 degrees counterclockwise, it is determined that the touch control operation of the user is rotating the operation object 40 degrees counterclockwise.

Step 23: According to the sliding direction and the sliding angle of the finger of the user relative to the center point, perform rotation processing on the operation object.

Under the rotation function state, according to the touch control operation of the user, corresponding processing is able to be performed on the operation object.

In this embodiment, two rotation function controls may also be set, that is, a clockwise rotation function control and a counterclockwise rotation function control. In this case, the sliding direction of the finger of the user does not need to be detected, and only the sliding angle of the finger of the user needs to be detected. For example, when the user clicks the clockwise rotation function control, in step 22, the corresponding alternative method is: using the point that is first touched by the finger of the user in the touch control area of the operation object as the center point, and detecting the sliding angle of the finger of the user relative to the center point; and in step 23, the corresponding alternative method is: according to the sliding angle of the finger of the user relative to the center point, performing the rotation processing on the operation object.

In this embodiment, first, the rotation function state is entered by triggering the rotation function control, and then the sliding direction and the sliding angle of the finger of the user on a touch control apparatus are further detected, so that abundant rotation touch control functions are implemented. In addition, this solution is easy to implement. Therefore, design complexity of the touch control apparatus is able to be reduced.

FIG. 3a is a flow chart of a touch control method according to a third embodiment of the present invention. In this embodiment, a user needs to perform a zoom operation on an operation object, for example, a certain picture, and the user may click a zoom function control to enter a zoom function state, so as to perform the zoom operation on the picture. The method includes the following steps:

Step 31: When it is detected that the user triggers the zoom function control, enter the zoom function state.

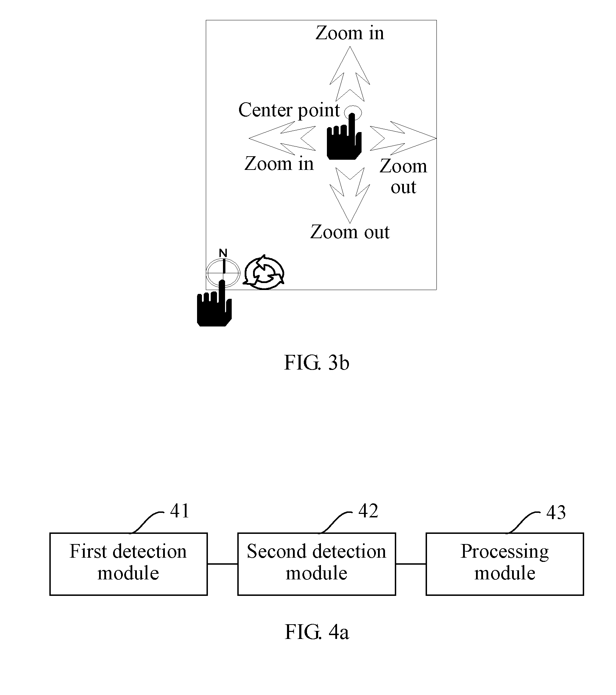

FIG. 3b is a schematic diagram of an application scenario of this embodiment. In FIG. 3b, the user first triggers the zoom function control, for example, clicks a zoom function button or touches a touch control area of the zoom function control. In this case, the zoom function state is entered. At this time, the user may use a finger to perform the zoom operation on the operation object on a touch control panel.

Step 32: Use a point that is first touched by the finger of the user in the touch control area of the operation object as a center point, and detect a sliding direction and a sliding length of the finger of the user relative to the center point.

After the rotation function state is entered, it is required to further detect whether the finger of the user slides in a first direction or slides in a second direction, and the sliding length. In this embodiment, the first direction represents a direction of zooming in the operation object, and the second direction represents a direction of zooming out the operation object. Customarily, the first direction may be an upward direction or a leftward direction, and the second direction may be a downward direction or a rightward direction.

A detection method is as follows: using the point that is first touched by the finger of the user in the touch control area of the operation object as the center point, and detecting the sliding direction and the sliding length of the finger of the user relative to the center point. If it is detected that the sliding direction of the finger of the user relative to the center point is the first direction, and the sliding length of the finger of the user is 20% of the length of the operation object, it is determined that the touch control operation of the user is zooming in the operation object by 20%; if it is detected that the sliding direction of the finger of the user relative to the center point is the second direction, and the sliding length of the finger of the user is 30% of the length of the operation object, it is determined that the touch control operation of the user is zooming out the operation object by 30%.

Step 33: According to the sliding direction and the sliding length of the finger of the user relative to the center point, perform zoom processing on the operation object.

Under the zoom function state, according to the touch control operation of the user, corresponding processing is able to be performed on the operation object.

In this embodiment, two function controls may also be set, that is, a zoom-in function control, and a zoom-out function control. In this case, the sliding direction of the finger of the user does not need to be detected, and only the sliding length of the finger of the user needs to be detected. For example, when the user clicks the zoom-in function control, in step 32, the corresponding alternative method is: using the point that is first touched by the finger of the user in the touch control area of the operation object as the center point, and detecting the sliding length of the finger of the user relative to the center point; and in step 33, the corresponding alternative method is: according to the sliding length of the finger of the user relative to the center point, performing zoom-in processing on the operation object.

In this embodiment, first, the zoom function state is entered by triggering the zoom function control, and then the sliding direction and the sliding length of the finger of the user on a touch control apparatus are further detected; so that abundant zoom touch control functions are implemented. In addition, this solution is easy to implement. Therefore, design complexity of the touch control apparatus is able to be reduced.

The foregoing illustrates implementing the rotation touch control function by setting the rotation function control and implementing the zoom touch control function by setting the zoom function control, separately. In the embodiments of the present invention, another function control may also be flexibly set and a corresponding touch control function may be implemented using the function control. The implementation principle is similar to that of the preceding methods, and therefore details are not described herein again.

FIG. 4a is a first schematic structural diagram of a touch control apparatus according to a fourth embodiment of the present invention. The touch control apparatus includes: a first detection module 41, a second detection module 42 and a processing module 43.

The first detection module 41 is configured to, when it is detected that a user triggers a function control, enter a function state corresponding to the function control.

The second detection module 42 is configured to, under the function state corresponding to the function control, detect a touch control operation performed by the user on an operation object on a touch control panel.

The processing module 43 is configured to, under the function state corresponding to the function control, perform corresponding processing on the operation object according to the touch control operation of the user.

The function control is an entity control, for example, a keyboard button or a touch style control. The function control includes: a rotation function control and/or a zoom function control.

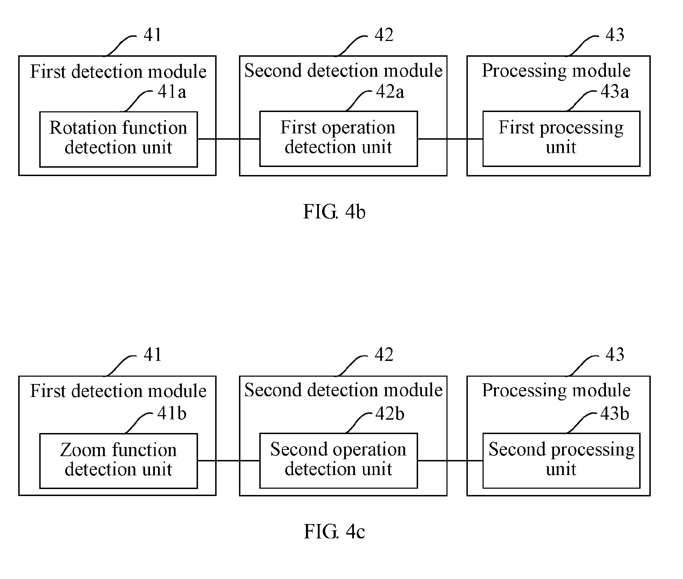

FIG. 4b is a second schematic structural diagram of a touch control apparatus according to the fourth embodiment of the present invention. In order to implement a rotation touch control function, the first detection module 41 includes: a rotation function detection unit 41a, configured to, when it is detected that the user triggers the rotation function control, enter a rotation function state.

The second detection module 42 includes: a first operation detection unit 42a, configured to, under the rotation function state, use a point that is first touched by a finger of the user in a touch control area of the operation object as a center point, and detect a sliding direction and a sliding angle of the finger of the user relative to the center point.

The processing module 43 includes: a first processing unit 43a, configured to, under the rotation function state, according to the sliding direction and the sliding angle of the finger of the user relative to the center point, perform rotation processing on the operation object.

FIG. 4c is a third schematic structural diagram of a touch control apparatus according to the fourth embodiment of the present invention. In order to implement a zoom touch control function, the first detection module 41 includes: a zoom function detection unit 41b, configured to, when it is detected that the user triggers the zoom function control, enter a zoom function state.

The second detection module 42 includes: a second operation detection unit 42b, configured to, under the zoom function state, use a point that is first touched by a finger of the user in a touch control area of the operation object as a center point, and detect a sliding direction and a sliding length of the finger of the user relative to the center point.

The processing module 43 includes: a second processing unit 43c, configured to, under the zoom function state, according to the sliding direction and the sliding length of the finger of the user relative to the center point, perform zoom processing on the operation object.

In this embodiment, first, the corresponding function state is entered by triggering the function control, and then the touch control operation of the user is further detected; and under this function state, the corresponding processing is performed on the operation object according to the touch control operation of the user. This solution is capable of implementing more abundant touch control functions than single-point touch control and is easy to implement. Therefore, design complexity of the touch control apparatus is able to be reduced.

It should be understood by persons of ordinary skill in the art that the accompanying drawings are merely schematic diagrams of embodiments, and modules or processes in the accompanying drawings are not indispensable for implementing the present invention.

It should be understood by persons of ordinary skill in the art that modules in an apparatus of an embodiment may be distributed in the apparatus of the embodiment according to the description of the embodiment, or correspondingly disposed in one or more apparatuses different from this embodiment after corresponding changes. The modules in the foregoing embodiment may be combined into one module or further divided into multiple sub-modules.

The sequence numbers of the foregoing embodiments of the present invention are merely for the convenience of description, and do not imply the preference among the embodiments.

Persons of ordinary skill in the art should understand that all or a part of the steps of the methods according to the embodiments may be implemented by a program instructing relevant hardware. The program may be stored in a computer readable storage medium. When the program is run, the steps of the methods according to the embodiments are performed. The foregoing storage medium includes any medium that is capable of storing program codes, such as a ROM, a RAM, a magnetic disk or an optical disk.

Finally, it should be noted that the foregoing embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the spirit and scope of the present invention.

## Claims

1. A touch control method, comprising:
entering, when it is detected that a user triggers a function control, a function state corresponding to the function control;
detecting a touch control operation performed by the user on an operation object on a touch control panel; and
under the function state corresponding to the function control, performing corresponding processing on the operation object according to the touch control operation of the user.

2. The touch control method according to claim 1, wherein the function control comprises: a rotation function control and/or a zoom function control.

3. The touch control method according to claim 2, wherein the entering, when it is detected that the user triggers the function control, the function state corresponding to the function control comprises:
when it is detected that the user triggers the rotation function control, entering a rotation function state;
correspondingly, the detecting the touch control operation performed by the user on the operation object on the touch control panel comprises:
using a point that is first touched by a finger of the user in a touch control area of the operation object as a center point, and detecting a sliding direction and a sliding angle of the finger of the user relative to the center point; and
correspondingly, the performing the corresponding processing on the operation object according to the touch control operation of the user comprises:
according to the sliding direction and the sliding angle of the finger of the user relative to the center point, performing rotation processing on the operation object.

4. The touch control method according to claim 2, wherein the entering, when it is detected that the user triggers the function control, the function state corresponding to the function control comprises:
entering a zoom function state when it is detected that the user triggers the zoom function control;
correspondingly, the detecting the touch control operation performed by the user on the operation object on the touch control panel comprises:
using a point that is first touched by a finger of the user in a touch control area of the operation object as a center point, and detecting a sliding direction and a sliding length of the finger of the user relative to the center point; and
correspondingly, the performing the corresponding processing on the operation object according to the touch control operation of the user comprises:
according to the sliding direction and the sliding length of the finger of the user relative to the center point, performing zoom processing on the operation object.

5. The touch control method according to any one of claims 1 to 4, wherein the function control is an entity control or a touch style control.

6. A touch control apparatus, comprising:
a first detection module, configured to, when it is detected that a user triggers a function control, enter a function state corresponding to the function control;
a second detection module, configured to, under the function state corresponding to the function control, detect a touch control operation performed by the user on an operation object on a touch control panel; and
a processing module, configured to, under the function state corresponding to the function control, perform corresponding processing on the operation object according to the touch control operation of the user.

7. The touch control apparatus according to claim 6, wherein the function control comprises:
a rotation function control and/or a zoom function control.

8. The touch control apparatus according to claim 7, wherein
the first detection module comprises: a rotation function detection unit, configured to, when it is detected that the user triggers the rotation function control, enter a rotation function state;
the second detection module comprises: a first operation detection unit, configured to, under the rotation function state, use a point that is first touched by a finger of the user in a touch control area of the operation object as a center point, and detect a sliding direction and a sliding angle of the finger of the user relative to the center point; and
the processing module comprises: a first processing unit, configured to, under the rotation function state, according to the sliding direction and the sliding angle of the finger of the user relative to the center point, perform rotation processing on the operation object.

9. The touch control apparatus according to claim 7, wherein
the first detection module comprises: a zoom function detection unit, configured to, when it is detected that the user triggers the zoom function control, enter a zoom function state;
the second detection module comprises: a second operation detection unit, configured to, under the zoom function state, use a point that is first touched by a finger of the user in the touch control area of the operation object as a center point, detect a sliding direction and a sliding length of the finger of the user relative to the center point; and
the processing module comprises: a second processing unit, configured to, under the zoom function state, according to the sliding direction and the sliding length of the finger of the user relative to the center point, perform zoom processing on the operation object.

10. The touch control apparatus according to any one of claims 6 to 9, wherein the function control is an entity control or a touch style control.
